# EUROPÄISCHE PATENTANMELDUNG

(11) **EP 4 052 939 A1**
(43) Veröffentlichungstag der Anmeldung: **07.09.2022**
(21) Anmeldenummer: 22158239.8
(22) Anmeldetag: 23.02.2022
(51) Int. Cl.: B60H 1/20, B60H 1/32, B60H 1/14, B60K 6/46, B60K 11/02, B60K 1/00, B60W 10/06, B60W 10/08, F01P 3/12

(54) **KALORISCHES FAHRZEUGMANAGEMENTSYSTEM**

(30) Priorität: 03.03.2021 DE 102021105089
(71) Anmelder: CM Fluids AG, 85296 Rohrbach (DE)
(72) Erfinder: Friedmann, Johann, 85298 Scheyern/Fernhag (DE); Ostermeier, Markus, 80636 München (DE)
(74) Vertreter: Rösler, Uwe

(57) **Zusammenfassung**

Beschrieben wird ein kalorisches Fahrzeugmanagementsystem für ein Kraftfahrzeuges, zu dessen ausschließlich elektromotorischer Fortbewegung wenigstens ein Elektromotor mittel- oder unmittelbar mit wenigstens einem Rad des Kraftfahrzeuges verbunden ist, der über eine elektrische Energiespeichereinheit mit elektrischer Energie versorgbar ist, die von einem durch einen Generator erzeugten, elektrischen Ladestrom herrührt, der von einem Verbrennungsmotor angetrieben ist, der eine betriebsbedingte Motorabwärme bei einer Temperatur T1 sowie eine Abgaswärme bei einer Temperatur T2, mit T2 >T1, abgibt.

Die Erfindung zeichnet sich dadurch aus, dass ein erster Wärmemittel-Kreislauf vorgesehen ist, der zur Abführung der betriebsbedingten Motorabwärme an den Verbrennungsmotor sowie jeweils zu Temperierungszwecken an den Generator, an die elektrische Energiespeichereinheit, an den wenigstens einen Elektromotor sowie an wenigstens einen Kraftfahrzeuginnenraum thermisch gekoppelt ist, dass der erste Wärmemittel-Kreislauf an wenigstens einen Wärmespeicher thermisch gekoppelt ist, und dass ein zweiter Wärmemittel-Kreislauf vorgesehen ist, der an die Abgaswärme längs eines Abgasstranges des Verbrennungsmotor sowie mit wenigstens einer Komponente des Kraftfahrzeuges thermisch gekoppelt ist.

## Beschreibung

### Technisches Gebiet

Die Erfindung bezieht sich auf ein kalorisches Fahrzeugmanagementsystem für ein Kraftfahrzeuges, zu dessen ausschließlich elektromotorischer Fortbewegung wenigstens ein Elektromotor mittel- oder unmittelbar mit wenigstens einem Rad des Kraftfahrzeuges verbunden ist, der über eine elektrische Energiespeichereinheit mit elektrischer Energie versorgbar ist, die von einem durch einen Generator erzeugten, elektrischen Ladestrom herrührt, der von einem Verbrennungsmotor angetrieben ist, der eine betriebsbedingte Motorabwärme bei einer Temperatur T1 sowie eine Abgaswärme bei einer Temperatur T2, mit T2 >T1, erzeugt.

### Stand der Technik

Die Konzeption und der Betrieb rein elektromotorisch angetriebener Fahrzeuge erfolgt zumeist unter der Maßgabe die im mitgeführten elektrischen Energiespeicher, zumeist in Form einer Batterie oder eines Akkumulators, gespeicherte elektrische Energie höchst effizient für den elektromotorischen Antrieb zu nutzen, um eine möglichst große Reichweite des elektromotorischen Kraftfahrzeuges zu erzielen. Neben dem elektromotorischen Antrieb gilt es jedoch eine Vielzahl weiterer für den Kraftfahrzeugbetrieb und einen damit verbundenen Komfort für den Fahrer und Mitfahrer nötige Komponenten mit elektrischer Energie zu versorgen, wie beispielsweise Belüftungssysteme, Heizung oder Kühlung der Fahrzeugzelle, Erzeugung von Licht sowie Temperierung des elektrischen Energiespeichers sowie Kühlung mechanischer Komponenten vor Überhitzung, wie beispielsweise der elektromotorische Antrieb des Kraftfahrzeuges, um nur einige Komponenten zu nennen. All die für den Betrieb eines elektromotorisch angetriebenen Kraftfahrzeuges erforderlichen Komponenten sowie die Bereitstellung an elektrischer Energie zu deren zum Teil erforderliche Temperierung bzw. Klimatisierung reduziert jene in der elektrischen Energieeinheit bevorratete bzw. abgespeicherte Energiemenge, die für den reinen, Reichweiten-bestimmenden Antrieb des Kraftfahrzeuges zur Verfügung steht.

Eine Möglichkeit, die Reichweite des elektromotorischen Kraftfahrzeuges zu optimieren und zugleich den vorstehend erläuterten Temperierungs- bzw. Klimatisierungsbedürfnissen gerecht zu werden, besteht in der technologisch möglichen aber sehr kostenintensiven Optimierung sämtlicher Energieverbrauchender Komponenten hinsichtlich ihrer jeweiligen spezifischen Energieeffizienz.

In Abkehr zu den allgemein erklärten Entwicklungszielen auf dem Gebiet von elektromotorisch angetriebenen Kraftfahrzeugen, die eine Wirkungsgradoptimierung jeder einzelnen Komponente verfolgen, wird in der Druckschrift WO 2015/028147 A1 ein elektromotorisches Fahrzeugkonzept vorgeschlagen, bei dem die Gesamtreichweite nicht durch die seitens des elektrischen Energiespeichers zur Verfügung gestellten Ladekapazität bestimmt ist, sondern durch die Menge an mitgeführtem Brennstoffes, der zum Antrieb eines optimiert Emissions-reduzierten Verbrennungsmotors genutzt wird, der mit einem Generator gekoppelt ist, durch den der elektrische Energiespeicher in ausreichender Weise aufgeladen bleibt, um den Energiebedarf des elektromotorischen Antriebs für das Kraftfahrzeug sicherzustellen.

Die Druckschrift DE 10 2017 200 409 A1 offenbart ein Fahrzeug mit einem Fahrgastraum sowie ein Klimatisierungssystem, mit einem Wärmespeicher und einer Absorptionsklimaanlage, welche einen Verdampfer, einen Absorber und einen Kocher aufweist. Zudem ist eine Steuereinheit vorgesehen, welche derart ausgebildet ist, dass diese einen ersten Kühlbetrieb einstellt, bei dem der Fahrgastraum gekühlt wird, indem in dem Verdampfer ein Kältemittel verdampft, das in einem Absorber von einem Absorptionsmedium absorbiert wird, wobei das verdampfte Kältemittel dem Verdampfer entzogen wird, sodass weiteres, flüssiges Kältemittel nachströmt und eine kontinuierliche Kühlung realisiert wird.

Die Druckschrift DE 10 2013 227 034 A1 beschreibt ein Thermomanagementsystem für Elektro- und Hybridfahrzeuge, das einen ersten Kühlmittelkreislauf aufweist, in dem ein flüssiges Kühlmittel zur Temperierung von elektrischen Komponenten eines elektrischen Antriebsstranges temperiert wird. Bei diesen Komponenten handelt es sich um einen elektrischen Antriebsmotor für den Fahrantrieb des Kraftfahrzeugs, eine Batterie für den Antrieb oder auch eine Leistungselektronik zur Steuerung des Antriebsmotors. In diesem ersten Kühlmittelkreislauf ist eine Pumpe und ein Umgebungswärmetauscher zur Abgabe von überschüssiger Wärme an die Umgebung integriert. Weiterhin umfasst das Thermomanagementsystem eine Konditioniereinheit zur Konditionierung eines Innenraums eines Kraftfahrzeugs, die je nach aktuellen Anforderungen entweder zum Wärmen oder zum Kühlen des Innenraums und vorzugsweise ergänzend auch zum Entfeuchten der Innenraum-Luft dient.

Die Druckschrift DE 103 33 219 A1 beschreibt eine Kühlanordnung für einen Verbrennungsmotor eines landwirtschaftlich genutztes Fahrzeugs, vorzugsweise für einen Schlepper, auf Basis eines Sorptionskühlsystems mit einem Verdampfer für ein Kältemittel, einer Sorptionskammer zur Sorption des Kältemitteldampfes, eine Desorptionskammer zur Desorption des Kältemittels aus dem Sorbens und einen Kondensator zur Kondensation des Kältemittels. Zur Bereitstellung der zur Desorption erforderlichen Wärme wird wenigstens ein erster Abgasstrom des Verbrennungsmotors der Desorptionskammer zugeführt. Dabei wird der Verdampfer zur zusätzlichen Kühlung des Kühlmediums des wenigstens einen Hauptkühlsystems sowie zur Kühlung eines zweiten Abgasstroms des Verbrennungsmotors verwendet.

Die Druckschrift DE 10 2018 100 105 A1 offenbart ein Wärmemanagementsystem für ein mit Verbrennungsmotor betriebenes Fahrzeug, das einen Kühlmittelkreislauf enthält, der zum Zirkulieren eines Kühlmittels und zum Übertragen von Wärme zwischen dem Kühlmittel und einem an das Fahrzeug angeschlossenen Wärmeverbraucher und einem Kältemittelkreislauf zum Umwälzen eines Kältemittels derart ausgebildet ist, dass das Kältemittel Wärme aus dem von dem Verbrennungsmotor erzeugten Abgas ableiten und anschließend Wärme an das Kühlmittel übertragen kann. Der Kältemittelkreislauf weist wenigstens einen Abgaswärmetauscher, einen Kompressor, einen Kühlmittelwärmetauscher, einen Kondensator und einen Verdampfer auf. Wärme, die über den Kühlmittelwärmetauscher auf das Kühlmittel übertragen wird, kann auf einen oder mehrere Wärmeverbraucher übertragen werden, einschließlich des ICE, eines Turboladers, eines Ölheizers, eines Heizkerns, etc..

Die Druckschrift DE 10 2016 104 564 A1 beschreibt ein Abgaswärme-Rückgewinnungssystem für ein Fahrzeug, das selektiv ein durch Kraftmaschinenabgas erwärmtes Fluid zum Erzeugen von Elektrizität an einen ersten Pfad und zum Erwärmen einer oder mehrerer Antriebsstrangkomponenten des Fahrzeugs an einen zweiten Pfad verteilt. Ein Steuergerät wählt auf der Grundlage einer Minimierung eines Kraftstoffverbrauchs einer Kraftmaschine eine Verteilung des Fluids an den ersten und zweiten Pfad aus. Das Steuergerät wählt ferner eine Verteilung des Fluids an die Antriebsstrangkomponenten aus, um den Kraftstoffverbrauch zu minimieren.

Die Druckschrift DE 11 2011 201 723 T5 offenbart ein elektrisches Maschinensystem, das einen Elektromotor und ein Absorptionskühlsystem umfasst, das durch Wärme betrieben wird, die durch den Elektromotor erzeugt wird, und derart ausgelegt ist, ein primäres Kühlfluid, das die Wärme von dem Elektromotor entfernt, auf eine Temperatur unter einer Umgebungstemperatur einer endgültigen Wärmesenke zu kühlen.

Die Druckschrift DE 10 2020 100 428 A1 beschreibt eine Klimatisierungs- und Batteriekühlanordnung mit einem A/C-Kühlmittelkreislauf und einem E-Antriebsstrang-Kühlmittelkreislauf sowie einem Kältemittelkreislauf, wobei der A/C-Kühlmittelkreislauf und der E-Antriebsstrang-Kühlmittelkreislauf über ein 4/2-Wege-Kühlmittelventil derart miteinander gekoppelt sind, dass der A/C-Kühlmittelkreislauf und der E-Antriebsstrang-Kühlmittelkreislauf separat betreibbar oder seriell durchströmbar ausgebildet sind.

### Darstellung der Erfindung

Der Erfindung liegt die Aufgabe zugrunde, ein kalorisches Fahrzeugmanagementsystem für ein Kraftfahrzeug, zu dessen ausschließlich elektromotorischer Fortbewegung wenigstens ein Elektromotor mittel- oder unmittelbar mit wenigstens einem Rad des Kraftfahrzeuges verbunden ist, der über eine elektrische Energiespeichereinheit mit elektrischer Energie versorgbar ist, die von einem durch einen Generator erzeugten, elektrischen Ladestrom herrührt, der von einem Verbrennungsmotor angetrieben ist, der eine betriebsbedingte Motorabwärme bei einer Temperatur T1 sowie eine Abgaswärme bei einer Temperatur T2, mit T2 >T1, abgibt, derart weiterzubilden, dass sämtlich relevante Komponenten, die für den Antrieb sowie auch den Mitfahrkomfort des Fahrzeuges erforderlich sind, derart miteinander thermisch zu koppeln sind, so dass eine optimale Nutzung der in der elektrischen Energiespeichereinheit abgespeicherten elektrischen Energie unter Maßgabe der Erzielung einer möglichst großen Reichweite erzielt werden soll.

Die Lösung der Aufgabe ist im Anspruch 1 angegeben. Den Erfindungsgedanken in vorteilhafter Weise weiterbildende Merkmale sind Gegenstand der Unteransprüche sowie im Weiteren unter Bezugnahme auf das illustrierte Ausführungsbeispiel zu entnehmen.

Lösungsgemäß ist das kalorische Fahrzeugmanagementsystem für ein Kraftfahrzeug, gemäß den Merkmalen des Oberbegriffes des Anspruches 1 derart ausgebildet, dass ein erster Wärmemittel-Kreislauf vorgesehen ist, der zur Abführung der betriebsbedingten Motorabwärme an den Verbrennungsmotor sowie jeweils zu Temperierungszwecken an den Generator, an die elektrische Energiespeichereinheit, an den wenigstens einen Elektromotor sowie an wenigstens einen Kraftfahrzeuginnenraum thermisch gekoppelt ist. Darüber hinaus ist der erste Wärmemittel-Kreislauf an wenigstens einen Wärmespeicher, vorzugsweise in Form eines Latentwärmespeichers, thermisch gekoppelt. Zudem ist ein zweiter Wärmemittel-Kreislauf vorgesehen, der an die Abgaswärme längs eines Abgasstranges des Verbrennungsmotors sowie mit wenigstens einer Komponente des Kraftfahrzeuges thermisch gekoppelt ist.

Der Erfindung liegt die Idee zugrunde den Verbrennungsmotor als Wärmequelle für weitgehend sämtliche im Betrieb des Kraftfahrzeuges anfallende Temperierungs- und Klimatisierungsaufgaben zu nutzen. Hierzu wird der Verbrennungsmotor als zweifache Wärmequelle angesehen und genutzt. Zum einen wird die Abwärme des Verbrennungsmotors genutzt, die es aus Gründen der Vermeidung einer Überhitzung des Verbrennungsmotors systembedingt abzuführen gilt und typischerweise auf einem Temperaturniveau T1 zwischen 80 und 95 °C liegt, zum anderen wird die auf einem viel höheren Temperaturniveau T2 von ca. 170°C befindliche Abgaswärme genutzt. Selbstverständlich können auch sehr viel höhere Abgastemperaturen, die bspw. zwischen 400 °C und 800°C liegen, entsprechend genutzt werden. Im Weiteren wird jedoch in nicht einschränkender Weise von Abgastemperaturen T2 von ca. 170 °C ausgegangen. Beide auf jeweils unterschiedlichen Temperaturniveaus befindliche Abwärmequellen werden separat voneinander kontrolliert, d.h. wärmemengendosiert, zur Temperierung bzw. Klimatisierung einzelner Komponenten des Kraftfahrzeuges eingesetzt.

Mit Hilfe wenigstens eines Wärmespeichers, der mit jeweils einer der beiden Abwärmequellen thermisch gekoppelt ist, wird eine abrufbare Bevorratung an Wärmemenge geschaffen, die bedarfsgerecht und unabhängig vom Betrieb des Verbrennungsmotors verfügbar ist.

In einer vorteilhaften Ausführungsform sind der erste und zweite Wärmemittel-Kreislauf über einen Wärmetauscher thermisch gekoppelt, um bedarfsweise eine thermische Stabilisierung bzw. Aufrechterhaltung eines sich im ersten Wärmemittel-Kreislauf ausbildenden Vorlauf-Temperaturniveaus T11 zu gewährleisten. Je nach thermischen Verhältnissen ist die thermische Kopplung des ersten und zweiten Wärmemittel-Kreislaufs über den Wärmetauscher sowie über die Aktivierung wenigstens einer mit dem zweiten Wärmemittel-Kreislauf thermisch gekoppelten Komponente des Kraftfahrzeuges aufeinander abgestimmt bzw. beeinflussbar.

Die im zweiten Wärmemittel-Kreislauf auf einem höheren Temperaturniveau T21 zwischengespeicherte Wärmemenge dient vorzugsweise zur Temperierung wenigstens einer der nachfolgenden Komponenten des Kraftfahrzeuges:
a) Kältequelle, die vorzugsweise in Form einer mit Abwärme betreibbaren Absorptionskältemaschine ausgebildet ist. Die für den Betrieb der Kältequelle erforderliche elektrische Energie stammt aus der im Kraftfahrzeug mitgeführten elektrischen Energiespeichereinheit.
b) Luftentfeuchter, der mit dem wenigstens einen Kraftfahrzeuginnenraum, in Luftaustausch steht. Vorzugsweise ist der Kfz-Innenraum in wenigstens zwei separate Raumbereiche unterteilt, eine Fahrerzelle sowie ein Fahrgastraum, von denen jeder Raumbereich getrennt temperierbar sind.
c) Katalysator des Verbrennungsmotors sowie
d) Elektrische Heizung, die mit dem wenigstens einen Elektromotor elektrisch verbunden ist und mit Rekuperationsstrom betreibbar ist, der beim Abbremsen des Kraftfahrzeuges vermittels des Elektromotors erzeugbar ist. Hierzu weist der zweite Wärmemittel-Kreislauf einen ersten Wärmemittelkreis, in dem das Wärmemittel die Vorlauftemperatur T21 besitzt, sowie einen zweiten Wärmemittelkreis auf, in dem das Wärmemittel über eine Rücklauftemperatur T22 verfügt. Die zu temperierenden Komponenten a) bis d) sind thermisch jeweils zwischen dem ersten und zweiten Wärmemittelkreis des zweiten Wärmemittel-Kreislauf gekoppelt.

Mittels wenigstens einer Regelungseinheit werden vorzugsweise der Generator, die elektrische Energiespeichereinheit, der wenigstens eine Elektromotor sowie der Kfz-Innenraum jeweils unter Maßgabe einer Komponenten-spezifischen Solltemperatur über eine thermisch kontrollierbare Kopplung an den ersten Wärmemittel-Kreislauf temperiert. Gleichsam dem zweiten Wärmemittel-Kreislauf weist auch der erste Wärmemittel-Kreislauf einen ersten Wärmemittelkreis, in dem das Wärmemittel eine Vorlauftemperatur T12 besitzt, sowie einen zweiten Wärmemittelkreis auf, in dem das Wärmemittel eine Rücklauftemperatur T22 besitzt. Die zu temperierenden Komponenten sind auch in diesem Fall thermisch jeweils zwischen dem ersten und zweiten Wärmemittelkreis des ersten Wärmemittel-Kreislaufs gekoppelt.

Um jeweils das Vorlauftemperaturniveau in beiden Wärmemittel-Kreisläufen zu stabilisieren sowie auch vom Betrieb des Verbrennungsmotors möglichst unabhängig zu machen, dienen die jeweils thermisch mit dem ersten und zweiten Wärmemittelkreis gekoppelten Wärmespeicher, zu deren kontrollierten Wärmeaufnahme aus dem ersten und/oder zweiten Wärmemittel-Kreislauf oder kontrollierten Wärmeabgabe an den ersten und/oder zweiten Wärmemittel-Kreislauf die wenigstens eine Regelungseinheit oder eine weitere Regelungseinheit dient.

Auch vermag die wenigstens eine Regelungseinheit die Kältequelle zur kontrollierten Erzeugung und Abgabe von Kältemenge an den zweiten Wärmemittel-Kreislauf zu beeinflussen.

### Kurze Beschreibung der Erfindung

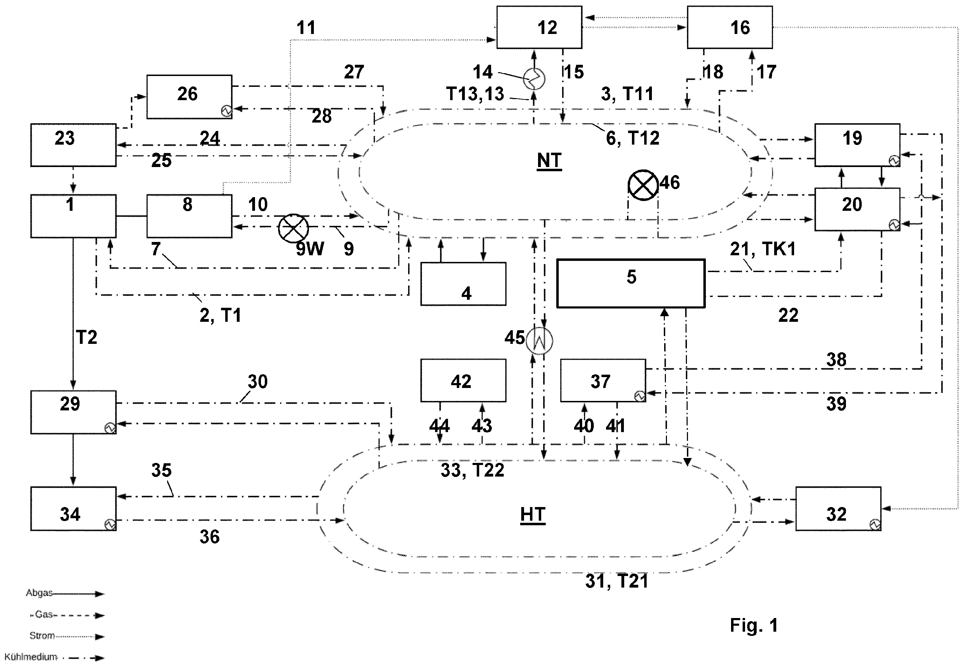

Das lösungsgemäße kalorische Fahrzeugmanagement wird ohne Beschränkung des allgemeinen Erfindungsgedankens anhand des in Figur 1 illustrierten Ausführungsbeispiels erläutert.

### Wege zur Ausführung der Erfindung, gewerbliche Verwendbarkeit

Figur 1 zeigt in schematischer Darstellung die Hauptkomponenten eines elektromotorisch angetrieben Kraftfahrzeuges, umfassend eine elektrische Energiespeichereinheit 12, einen Elektromotor 16 zum Antrieb wenigstens eines Rades des Kraftfahrzeuges, einen Generator 8 zur Stromerzeugung und Aufladung der elektrischen Energiespeichereinheit 12 sowie einen Verbrennungsmotor 1 zum Antrieb des Generators 8.

Das lösungsgemäße kalorische Fahrzeugmanagement-System umfasst die in Figur 1 dargestellte thermische Kopplung sämtlicher Komponenten unter effizienter Nutzung der vermittels des Verbrennungsmotors 1 erzeugten Wärmemenge, die in Form zweier unterschiedlicher Abwärmeniveaus abgegeben werden. Das erste Wärmeniveau T1 betrifft die Motorabwärme, die typischerweise Temperaturen zwischen 80°C und 95°C, vorzugsweise 90°C besitzt. Das zweite Wärmeniveau T2 betrifft die Abgastemperatur des Verbrennungsmotors, die im Bereich von etwa 170°C liegt.

Zur Abführung der Motorwärme bei T1 ist der Verbrennungsmotor 1 an eine Wärmemittel-Ableitung 2 thermisch gekoppelt, die in einen ersten Wärmemittelkreis 3 mündet, der typischerweise eine Vorlauftemperatur T11 von 65°C besitzt. Der erste Wärmemittelkreis 3 des ersten Wärmemittel-Kreislaufs, im Weiteren als Niedertemperaturkreislauf NT bezeichnet, ist mit einem ersten Wärmespeicher 4, vorzugsweise in Form eines Latentwärmespeichers verbunden, der auf der Vorlauftemperatur T11 gehalten wird.

Der vom Verbrennungsmotor 1 angetriebene Generator 8 wird gleichsam über eine Ableitung 9 aus dem zweiten Wärmemittelkreis 6 des Niedertemperaturkreislaufs NT gekühlt. Optional ist längs der Ableitung 9 zusätzlich ein Wärmetauscher 9W eingebracht, um zu Kühlzwecken des Generators 8 die Rücklauftemperatur T12 abzusenken, vorzugsweise auf 45°C. Das durch den Generator 8 erwärmte Wärmemittel wird über eine Rückführung 10 dem ersten Wärmemittelkreis 3 des Niedertemperaturkreislaufs NT zugeführt. Der Generator 8 speist über eine elektrische Zuleitung 11 die elektrische Energiespeichereinheit 12 in Form einer Batterie, die ihrerseits zu Kühlzwecken an den sich auf der Rücklauftemperatur T12 befindlichen zweiten Wärmemittelkreis 6 thermisch gekoppelt ist. Um die Batterie effektiv zu kühlen, ist längs der hierfür vorgesehenen Wärmemittelzuführung 13 ein Wärmetauscher 14 eingebracht, damit das die elektrische Energiespeichereinheit 12 zu kühlende Wärmemittel von der Rücklauftemperatur T12 von etwa 55°C auf ein Temperaturniveau T13 von ca. 20 °C bis 25°C gesenkt werden kann. Die Rückführung 15 des die elektrische Energiespeichereinheit 12 temperierenden Wärmemittels erfolgt wieder in den zweiten Wärmemittelkreis 6 des Niedertemperaturkreislaufs NT.

Die elektrische Energiespeichereinheit 12 speist den Elektromotor 16 zum Antrieb des Kraftfahrzeuges, den es ebenso zu kühlen gilt. Hierzu ist über eine Zuführung 17 der Elektromotor 16 an den auf der Rücklauftemperatur T12 befindlichen zweiten Wärmemittelkreis 6 gekoppelt. Das durch die thermische Kopplung mit dem Elektromotor 16 erwärmte Wärmemittel wird über eine Ableitung 18 dem ersten Wärmemittelkreis 3 zugeführt.

Auch die Temperierung bzw. Klimatisierung des Kraftfahrzeuginnenraums erfolgt durch thermische Kopplung an den ersten und zweiten Wärmemittelkreis 3, 6 des Niedertemperaturkreislaufs NT. In dem in Figur 1 dargestellten Ausführungsbeispiel ist es möglich, den Fahrerplatz 19 des Kraftfahrzeugs, vorzugsweise in Form eines Busses, getrennt bzw. separat zum Fahrgastraum 20 zu klimatisieren. Hierzu sind Fahrerplatz 19 sowie Fahrgastraum 20 über Zu- und Ableitungen mit dem ersten und zweiten Wärmemittelkreis 3, 6 des Niedertemperaturkreislaufs NT thermisch gekoppelt.

Sollte die Kühl- oder Heizleistung des ersten und zweiten Wärmemittelkreises 3, 6 des Niedertemperaturkreislaufs NT für die Klimatisierung des Fahrerplatzes 19 sowie Fahrgastraumes 20 nicht ausreichen, so sind der Fahrerplatz 19 sowie der Fahrgastraum 20 über eine Kühlzuleitung 21 mit einer Kältequelle 5, vorzugsweise in Form einer Absorptionskältemaschine, verbunden. Beispielsweise vermag die Kältequelle 5 vermittels eines Kühlmittels, das eine Kühlvorlauftemperatur TK1 von ca. 8°C besitzt, bedarfsweise den Fahrerplatz 19 sowie den Fahrgastraum 20 zu kühlen. Über die Rückführung 22 wird das erwärmte Kühlmittel der Kältequelle 5 im Kreislauf rückgeführt. Zum Betrieb der Kältequelle 5, vorzugsweise in Form einer Absorptionskältemaschine, ist diese an den zweiten Wärmemittel-Kreislauf, im Weiteren als Hochtemperaturkreislauf HT bezeichnet, thermisch gekoppelt, der, wie im Weiteren erläutert wird, thermisch an die Abgase des Verbrennungsmotors 1 gekoppelt ist.

Optional erfolgt eine Temperierung des mitgeführten Brennstofftanks 23 zur Speisung des Verbrennungsmotors 1. Vorzugsweise wird als Verbrennungsmotor 1 ein Gasmotor eingesetzt, so dass der Brennstofftank 23 in Form eines Gastanks ausgebildet ist, vorzugsweise ein LNG-Tank ist, den es auch zu Sicherheitszwecken innerhalb eines vorgegebenen Temperaturbereiches zu temperieren gilt. Zudem erfordert der Betrieb eines Gasmotors einen passenden Gasdruck, Ohne eine entsprechende Temperierung wäre das LNG eventuell zu kalt wodurch nicht ausreichend LNG verdampfen könnte. Hierzu ist der Brennstofftank 23 über eine Ableitung 24 mit dem ersten Wärmemittelkreis 3 thermisch gekoppelt. Die Rückführung 25 des erwärmten Wärmemittels erfolgt in den zweiten Wärmemittelkreis 6 des Niedertemperaturkreislaufs NT.

Optional ist der Brennstofftank 23 mit einer Heizung 26 verbunden, die über die Ableitung 27 und Zuleitung 28 an den ersten und zweiten Wärmemittelkreis 3, 6 thermisch gekoppelt ist. Die Heizung 26 ist bedarfsweise in jenen Fällen zu aktivieren, in denen die Vorlauftemperatur T11 abfällt und die Motorabwärme des Verbrennungsmotors 1 nicht ausreicht und/oder die Abgabe von Wärmeenergie aus dem Wärmespeicher 4 zu gering ist, um die erwünschte Vorlauftemperatur T11 auf einem Solltemperatur-Niveau, vorzugsweise von 65°C, zu halten.

Das Wärmemittel, das in dem vorstehend erläuterten, aus dem ersten und zweiten Wärmemittelkreis 3, 6 zusammengesetzten Niedertemperatur-Kreislauf NT zirkuliert, befindet sich entweder auf der Vorlauftemperatur T11 von etwa 65°C oder auf der niedrigeren Rücklauftemperatur T12 von ca. 55°C. Diese beiden Temperaturniveaus ermöglichen eine aufeinander abgestimmte Temperierung des Gasmotors 1, des Generators 8, der elektrischen Energiespeichereinheit 12, des Elektromotors 16 sowie eine bzw. Klimatisierung des Fahrgastraums 20 und Fahrerplatz 19. Neben der Wärmequelle in Form des Verbrennungsmotors 1 dient der Wärmespeicher 4 als Temperatur-stabilisierende Komponente für die Vor- und Rücklauftemperaturen T11, T12 innerhalb des ersten und zweiten Wärmemittelkreises 3, 6.

Ferner wird die durch den Verbrennungsmotor 1 erzeugte Abgastemperatur, die sich auf einem sehr viel höheren, zweiten Wärmeniveau T2 von ca. 170°C befindet, genutzt. Hierzu ist der Abgasstrang 29 über eine Wärmemittelzuleitung 30 an den ersten Wärmemittelkreis 31 des bereits erwähnten Hochtemperaturkreislaufes HT gekoppelt. An den ersten Wärmemittelkreis 31 koppelt eine Elektroheizung 32 an, die mit dem Elektromotor 16 elektrisch verbunden ist und bei Bremsvorgängen des Kraftfahrzeuges mittels Rekuperationsstrom betreibbar ist. Die Elektroheizung 32 hebt das innerhalb des ersten Wärmemittelkreises 31 des Hochtemperaturkreislaufes HT vorherrschende Temperaturniveau auf ca. 250°C Vorlauftemperatur T21 an. Demgegenüber sieht der Hochtemperaturkreislauf HT einen zweiten Wärmemittelkreis 33 vor, in dem eine Rücklauftemperatur T22 von 150°C vorherrscht. Der zweite Wärmemittelkreis 33 ist gleichsam mit der Elektroheizung 32 thermisch gekoppelt.

Wie bereits erläutert koppelt die Kältequelle 5 an den Hochtemperatur-Kreislauf HT an.

In besonders vorteilhafter Weise wird das hohe Temperaturniveau T21 innerhalb des Hochtemperaturkreislaufes HT zur Vorwärmung eines Katalysators 34 für den Verbrennungsmotor 1 eingesetzt, der thermisch über den Zulauf 35 mit dem ersten Wärmemittelkreis 31 und über den Ablauf 36 mit dem zweiten Wärmemittelkreis 33 des Hochtemperaturkreislaufes HT gekoppelt ist. Zudem wird das hohe Temperaturniveau T21 des Hochtemperaturkreislaufes HT für einen Luftentfeuchter 37 verwendet, der über Luftzu- und -ableitungen 38, 39 mit dem Fahrerplatz 19 sowie Fahrgastraum 20 verbunden ist. Der Luftentfeuchter 37 ist über eine Zuleitung 40 mit dem ersten Wärmemittelkreis 31 sowie über eine Ableitung 41 mit dem zweiten Wärmemittelkreis 33 des Hochtemperaturkreislaufes HT thermisch gekoppelt.

Ferner ist ein Wärmespeicher 42 mit dem Wärmemittelkreis 31 des Hochtemperaturkreislaufs HT über die Zu- und Ableitung 43, 44 verbunden.

Schließlich sind der Nieder- und Hochtemperaturkreislauf NT, HT über einen Wärmtauscher 45 bedarfsweise thermisch aneinander gekoppelt.

Optional ist für eine kontrollierte Abfuhr von Überschusswärme zusätzlich ein Wärmetauscher, vorzugsweise in Form eines Wasser-/ Luft - Wärmetauschers 46, an den Niedertemperaturkreislauf NT gekoppelt.

### Bezugszeichenliste

- 1: Verbrennungsmotor
- 2: Wärmemittelableitung
- 3: erster Wärmemittelkreis
- 4: Wärmespeicher
- 5: Kältequelle
- 6: zweiter Wärmemittelkreis
- 7: Ableitung
- 8: Generator
- 9: Ableitung
- 9W: Wärmetauscher
- 10: Rückführung
- 11: elektrische Zuleitung
- 12: elektrische Energiespeichereinheit
- 13: Zuführung
- 14: Wärmetauscher
- 15: Rückführung
- 16: Elektromotor
- 17: Zuführung
- 18: Ableitung
- 19: Fahrerplatz
- 20: Fahrgastraum
- 21: Kühlmittelzuleitung
- 22: Kühlmittelrückführung
- 23: Brennstofftank
- 24: Ableitung
- 25: Rückführung
- 26: Heizung
- 27: Ableitung
- 28: Zuleitung
- 29: Abgasstrang
- 30: Wärmemittelzuleitung
- 31: erster Wärmemittelkreis
- 32: Elektroheizung
- 33: zweiter Wärmemittelkreis
- 34: Katalysator
- 35: Zulauf
- 36: Ablauf
- 37: Luftentfeuchter
- 38: Luftzuleitung
- 39: Luftableitung
- 40: Zuleitung
- 41: Ableitung
- 42: Wärmespeicher
- 43: Zuleitung
- 44: Ableitung
- 45: Wärmekoppler
- 46: Wärmetauscher
- T11: Vorlauftemperatur
- T12: Rücklauftemperatur
- T21: Vorlauftemperatur
- T22: Rücklauftemperatur
- T13: Vorlauftemperatur
- TK1: Kühlmittelvorlauftemperatur

## Patentansprüche

1. Kalorisches Fahrzeugmanagementsystem für ein Kraftfahrzeuges, zu dessen ausschließlich elektromotorischer Fortbewegung wenigstens ein Elektromotor (16) mittel- oder unmittelbar mit wenigstens einem Rad des Kraftfahrzeuges verbunden ist, der über eine elektrische Energiespeichereinheit (12) mit elektrischer Energie versorgbar ist, die von einem durch einen Generator (8) erzeugten, elektrischen Ladestrom herrührt, der von einem Verbrennungsmotor (1) angetrieben ist, der eine betriebsbedingte Motorabwärme bei einer Temperatur T1 sowie eine Abgaswärme bei einer Temperatur T2, mit T2 >T1, abgibt,
**dadurch gekennzeichnet, dass** ein erster Wärmemittel-Kreislauf (3) vorgesehen ist, der zur Abführung der betriebsbedingten Motorabwärme an den Verbrennungsmotor (1) sowie jeweils zu Temperierungszwecken an den Generator (8), an die elektrische Energiespeichereinheit (12), an den wenigstens einen Elektromotor (16) sowie an wenigstens einen Kraftfahrzeuginnenraum thermisch gekoppelt ist,
dass der erste Wärmemittel-Kreislauf (3) an wenigstens einen Wärmespeicher (4) thermisch gekoppelt ist, und
dass ein zweiter Wärmemittel-Kreislauf (6) vorgesehen ist, der an die Abgaswärme längs eines Abgasstranges (29) des Verbrennungsmotor (1) sowie mit wenigstens einer Komponente des Kraftfahrzeuges thermisch gekoppelt ist.

2. Kalorisches Fahrzeugmanagementsystem nach Anspruch 1,
**dadurch gekennzeichnet, dass** der erste und zweite Wärmemittel-Kreislauf (3, 6) über einen Wärmetauscher (46) thermisch gekoppelt sind.

3. Kalorisches Fahrzeugmanagementsystem nach Anspruch 1 oder 2, **dadurch gekennzeichnet, dass** die wenigstens eine Komponente des Kraftfahrzeuges eine der nachfolgenden Komponenten ist:
- eine Kältequelle (5),
- ein Luftentfeuchter (37), der mit dem wenigstens einen Kraftfahrzeuginnenraum in Luftaustausch steht,
- ein Katalysator (34) des Verbrennungsmotors (1),
- wenigstens ein Wärmespeicher (4, 42),
- eine elektrische Heizung (32), die mit dem wenigstens einen Elektromotor (16) elektrisch verbunden ist und mit Rekuperationsstrom betreibbar ist, der beim Abbremsen des Kraftfahrzeuges vermittels des Elektromotors (16) erzeugbar ist.

4. Kalorisches Fahrzeugmanagementsystem nach einem der Ansprüche 1 bis 3, **dadurch gekennzeichnet, dass** der wenigstens eine Wärmespeicher (4, 42) ein Latentwärmespeicher ist.

5. Kalorisches Fahrzeugmanagementsystem nach Anspruch 3,
**dadurch gekennzeichnet, dass** die Kältequelle (5) eine mit Abwärme betreibbare Absorptionskältemaschine ist.

6. Kalorisches Fahrzeugmanagementsystem nach Anspruch 1 oder 2,
**dadurch gekennzeichnet, dass** der Kraftfahrzeuginnenraum in wenigstens zwei separate Raumbereiche (19, 20) unterteilt ist, von denen jeder Raumbereich getrennt temperierbar ist.

7. Kalorisches Fahrzeugmanagementsystem nach einem der Ansprüche 1 bis 6, **dadurch gekennzeichnet, dass** wenigstens eine Regelungseinheit vorgesehen ist, die wenigstens eine der nachfolgenden Komponenten jeweils unter Maßgabe einer Solltemperatur temperiert:
der Generator (8), die elektrische Energiespeichereinheit (12), der wenigstens eine Elektromotor (1), den Kraftfahrzeuginnenraum.

8. Kalorisches Fahrzeugmanagementsystem nach einem der Ansprüche 1 bis 7,
**dadurch gekennzeichnet, dass** wenigstens eine Regelungseinheit vorgesehen ist, die den wenigstens einen Wärmespeicher (4, 42) zur Aufnahme einer Wärmemenge aus dem ersten und/oder zweiten Wärmemittel-Kreislauf (3, 6) oder Abgabe einer Wärmemenge in den ersten und/oder zweiten Wärmemittel-Kreislauf (3, 6) befähigt.

9. Kalorisches Fahrzeugmanagementsystem nach einem der Ansprüche 3 bis 8, **dadurch gekennzeichnet, dass** wenigstens eine Regelungseinheit vorgesehen ist, die die Kältequelle (5) zur Erzeugung und Abgabe von Kältemenge befähigt.
